# EUROPEAN PATENT SPECIFICATION

(11) **EP 4 450 365 B1**
(45) Date of publication and mention of the grant of the patent: **04.11.2026**
(21) Application number: 23802129.9
(22) Date of filing: 27.09.2023
(51) Int. Cl.: B61L 29/22, B61L 29/28, B61L 25/02, B61L 27/20, B61L 27/40, B61L 29/32

(54) **CROSSING CONTROL METHOD AND APPARATUS, ELECTRONIC DEVICE AND STORAGE MEDIUM**
KREUZUNGSSTEUERUNGSVERFAHREN UND -VORRICHTUNG, ELEKTRONISCHE AUSRÜSTUNG UND SPEICHERMEDIUM
PROCÉDÉ ET APPAREIL DE COMMANDE DE CROISEMENT, DISPOSITIF ÉLECTRONIQUE ET SUPPORT DE STOCKAGE

(30) Priority: 03.03.2023 CN 202310196835
(43) Date of publication of application: 23.10.2024
(73) Proprietor: CRSC RESEARCH & DESIGN INSTITUTE GROUP CO., LTD., Fengtai District Beijing 100070 (CN)
(72) Inventor: LIN, Qiang, Beijing 100070 (CN); ZHANG, Lifeng, Beijing 100070 (CN); NIE, Zhiguo, Beijing 100070 (CN); YANG, Yao, Beijing 100070 (CN); LI, Xiang, Beijing 100070 (CN); QU, Dandan, Beijing 100070 (CN); YANG, Fan, Beijing 100070 (CN)
(74) Representative: Zaboliene, Reda
(86) International application number: PCT/CN2023/122249
(87) International publication number: WO 2024/183272

(56) References cited:
- CN-A- 103 587 557
- CN-A- 104 802 832
- CN-A- 110 341 767
- CN-A- 113 715 882
- CN-A- 113 859 331
- CN-A- 116 161 089
- DE-A1- 102016 211 481
- DE-A1- 19 529 374
- JP-A- 2011 148 349

## Description

### TECHNICAL FIELD

The present invention relates to a crossing control method, a crossing control device, an electronic equipment and a storage medium.

### BACKGROUND

A railway level crossing allows the road traffic to cross the railway line, so that it is necessary to adopt a safe and reliable control system to effectively ensure the safety of road traffic vehicles and pedestrians. For the crossing area with dense traffic, to ensure the safety, an audible and visual alarm protection device with roadway gates is usually disposed, and the roadway gates are lowered automatically or manually to close the crossing area, so that a train can pass through the crossing normally.

In the traditional automatic crossing control mode, a sufficient safety distance is generally reserved in front of the crossing to dispose a train approaching detection point, a crossing system sends out a crossing closing pre-warning after detecting that the train enters the train approaching detection point, lowers the crossing roadway gates after a certain period of time, and gives a railway side passing permission signal after the crossing is completely closed, otherwise, a railway side passing forbidding signal should be given. In this control mode, to ensure the safety, the arrangement of the detection points is designed according to the maximum travel speed allowed by the train, which wastes the traffic capacity of the roadway side, and is more likely to cause traffic congestion in the area with dense traffic on the roadway side, resulting in low traffic efficiency.

DE 10 2016 211 481 A1 discloses a method for securing a railroad crossing which allows for a timely security of the railroad crossing and is especially efficient and reliable at the same time. Therefore, data of a nearing track-bound vehicle are received by a stationary control unit of the train control system, which includes at least the current position as well as the current travel speed of the vehicle. By taking into consideration the received vehicle data as well as the location of the railroad crossings track data a turn-on point is determined. Once the track-bound vehicle reaches the turn-on point the railroad crossing will be secured. Furthermore, a stationary control unit for a train control system and an arrangement with such a stationary control unit are disclosed.In DE 195 29 374 A1 a method for integrating railroad crossings into automated controlling and security of track-bound vehicles is disclosed. Thereby railroad crossings are integrated into the track list as removable stopping points for the calculation of the individual driving curve. A removal of the railroad crossing as a stopping point happens, if the railroad crossing logic which controls the railroad crossing unit has closed the railroad crossing after receiving a closing request via radio data transmission by a nearing vehicle and has sent a confirmation notice to the vehicle.

CN 113 715 882 A discloses a method for detecting obstacles at railway crossings, which is characterized by at least comprising a video acquisition unit for acquiring a level crossing, a distance sensing unit for a train from the crossing, a speed sensing unit for the train in the direction of the crossing, and a processing unit. The processing unit is electrically connected to the video acquisition unit, the distance sensing unit and the speed sensing unit. Furthermore, the processing unit is used to acquire video information of the level crossing, distance information of the train from the crossing, and speed information of the train in the direction of the crossing. The processing unit outputs prompt information and controls the rise and fall of the barrier according to the state of acquiring video information of the level crossing, distance information of the train from the crossing, and speed information of the train in the direction of the crossing.

### SUMMARY

The object of the present invention is to solve the problems in the use of the existing control method proposed in the above background. The above object is achieved according to the invention by the crossing control method as defined by claim 1.

According to the invention, the method further includes:
based on the closing time of the roadway gate, controlling an obstruction signal to display a passing or stopping signal.

According to the invention, the step of determining a switching-on time point of an alarm and a closing time of a roadway gate based on the comparison result includes:
constructing an inequality of the expected travel distance and the length of the control area, when the expected travel distance is not less than the above length of the control area, correspondingly acquiring a travel time of the train in the control area under this node, and obtaining the switching-on time point of the alarm and the closing time of the roadway gate based on the travel time.

According to the invention, the switching-on time point of the alarm and the closing time of the roadway gate are calculated based on different inequalities of the expected travel distance and the length of the control area, and the switching-on time point of the alarm and the closing time of the roadway gate are only variables in the respective inequalities except for the running speed of the train.

Preferably, calculating an expected travel distance of the train in real time after the train enters a control area based on the running speed of the train includes:
periodically acquiring the running speed of the train, to calculate a running distance of the train in a plurality of periods.

According to the invention, the expected travel distance includes a warning length, an emptying length, a closing length, and a braking length.

According to the invention, the switching-on time point of the alarm is obtained based on the following inequality: ${\sum }_{i = 0}^{n} {V}_{i} C + {V}_{n} T + {L}_{{V}_{n}} < L - {L}_{1} ,$ where *Vᵢ* is the running speed of the train, measured in a period, C is a measurement period of the train speed, ${\sum }_{i = 0}^{n} {V}_{i} C$ represents the alarming length *S₀*, *Vₙ* is the train speed in the n^{th} period after the alarm is switched on, *L_{Vn}* is the maximum braking distance for the train to approach the crossing at *Vₙ*, *T* = *T₁ + T₂*, *T₁* is the time from alarm sending out an alarming signal to emptying the crossing area (i.e. the above emptying time), *T₂* is the closing time of the roadway gate, *L* is the distance between the detection point and the crossing, *L₁* is the distance from the obstruction signal to the crossing, and *L - L₁* is the length of the control area.

According to the invention, the closing time of the roadway gate is obtained based on the following inequality: ${\sum }_{k = 0}^{{T}_{m} / C} {V}_{k} + {S}_{0} + {S}_{1} + {L}_{{V}_{m}} \leq L - {L}_{1} ,$ where *Tₘ* is the time available to switch off the roadway gate; *L_{Vm}* is the braking distance of the train at the current speed, *L* is the distance between the detection point and the crossing, *L₁* is the distance from the obstruction signal to the crossing, and *L - L₁* is the length of the control area.

Preferably, the real-time running speed of the train is measured by at least one speed measuring device disposed at the position of the detection point.

The above object is further achieved according to the invention by the crossing control device as defined by claim 4.

The above object is further achieved according to the invention by the electronic equipment defined by claim 5.

The above object is further achieved according to the invention by computer-readable storage medium as defined by claim 6.

Compared with the prior art, the present invention has the following beneficial effects.

According to the present application, based on the real-time detection result of the train speed, the expected travel distance of the train after the trail enters the control area is calculated in real time, and the expected travel distance is compared with the length of the control area to determine the switching-on time point of the alarm and the closing time of the roadway gate, so that the switching-on time of the alarm can be delayed and the closing time of the roadway gate can be prolonged, to improve the passing efficiency of the crossing.

### BRIEF DESCRIPTION OF THE DRAWINGS

FIG. 1 is a plan view of a control system;
FIG. 2 is a flow chart of an existing control solution;
FIG. 3 is a schematic diagram of division of an existing approaching area;
FIG. 4 is a flow chart of the present invention;
FIG. 5 is a schematic diagram of approaching area division according to the present invention; and

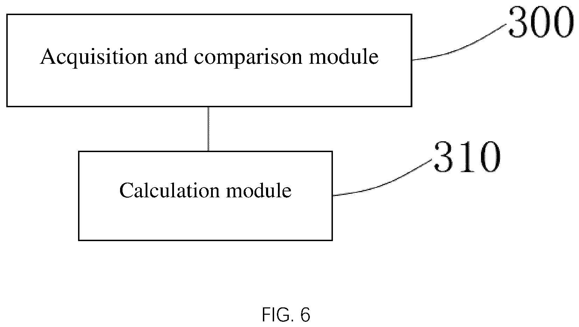

FIG. 6 is a schematic diagram of a device of the present invention.

Reference numerals: 200, control terminal; 210, detection point; 220 train; 230, gate motor; 240, alarm; 250, obstacle detection equipment; 260, obstruction signal; 270, crossing; 280, crossing signal; 290, power cable; 300, acquisition and comparison module; 310, calculation module.

### DETAILED DESCRIPTION OF THE EMBODIMENTS

Embodiments of the present invention will be clearly and completely described below with reference to the drawings.

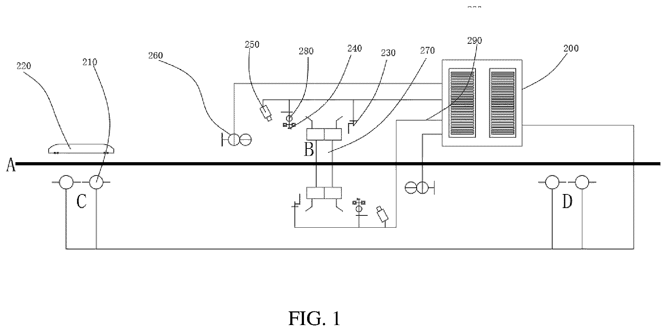

Referring to FIG. 1, which is a schematic plan view of a crossing position control system, a line A in the figure represents a track of a train 220, a crossing 270 is disposed at a plane crossing position of a road and the track of the train 220, the figure exemplarily gives a disposing position of a crossing B and a hardware composition of a control system disposed around the crossing B. Specifically, the above control system is provided with a control terminal 200, the control terminal 200 communicates with other hardware equipment of the control system in a wireless and/or wired manner to implement data exchange between the control terminal 200 and other equipment, and can process data and correspondingly control actions of other equipment in the system by relying on the control terminal 200. In some embodiments of the control system, the control terminal 200 may be connected to other equipment in the control system via a power cable 290 and/or a network, and FIG. 1 exemplarily gives the connection of the control terminal 200 to other equipment via the power cable 290. Returning to FIG. 1, the above control system further includes two detection points 210. For description, the two detection points 210 are respectively denoted as C and D, the detection point C and the detection point D are respectively disposed on two sides of the crossing B, and the distance (represented by L in the following description) from the detection point C to the crossing B is the same as that from the detection point D to the crossing B, to detect the train 220 passing through the crossing B from different directions, and to correspondingly send the approaching information of the train 220 to the control terminal 200, which is convenient for the control system to perform subsequent control. Exemplarily, in FIG. 1, the train 220 moves from the left side to the right side in the figure, the approaching information of the train 220 is correspondingly detected through the detection point C in the figure, and the control system enters an active state to perform subsequent control operations.

The above control system further includes a gate motor 230, which can switch on or switch off the crossing 270 based on the switching-on or closing instructions sent by the control terminal 200; the above control system further includes at least one alarm 240, obstacle detection equipment 250, and the gate motor 230, where the alarm 240 is an audible and visual alarm 240, and after detecting that the train 220 enters a designated position, the alarm 240 releases an alarming signal (such as an alarm) to remind the crowds and vehicles passing through the crossing 270. At this time, the crowds or vehicles that have entered the crossing 270 area should pass through as soon as possible, and the crowds or vehicles that have not entered the crossing 270 area should stop and wait. The obstacle detection equipment 250 is used to detect the crowds and vehicles in the crossing 270 area, to determine the emptying situation in the crossing 270 area. Exemplarily, the obstacle detection equipment 250 may be a camera device, which can shoot the crossing 270 area and transmit the image data to the control terminal 200, and the control terminal 200 can identify information of the crowds and vehicles in the image data, to determine the emptying situation of the crossing 270 area. In some embodiments of the control system, two alarms 240 and two obstacle detection equipment 250 are respectively arranged at two ends of the crossing 270, so that the alarming areas of the alarms 240 and the camera shooting areas of the obstacle detection equipment 250 can completely cover the crossing area. The control terminal 200 can correspondingly send a closing or switching-on control instruction to the gate motor 230 based on the identification result of the image data of the obstacle detection equipment 250, for example, the gate motor 230 is correspondingly controlled to be closed after the emptying of crossing area is completed; and the control system further includes two crossing signals 280 for indicating the passing of the crowds and vehicles in the crossing 270 area.

The above control system further includes two obstruction signals 260 oppositely disposed on two sides of the crossing 270 for displaying a passing or stopping signal to indicate the running of the train 220.

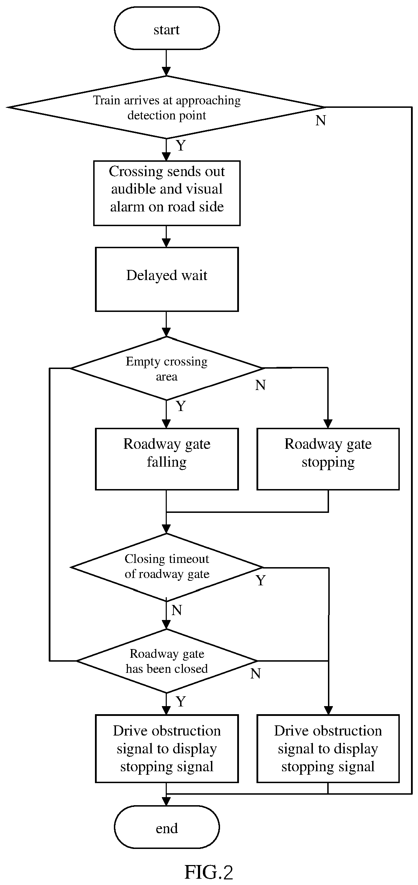

FIG. 2 exemplarily gives the existing control flow of the above control system. The specific process includes: detecting the approaching information of the train 220 through the detection point 210 of the train 220, and after the control terminal 200 receives the information that the train 220 has arrived at the detection point 210, the control terminal 200 correspondingly sends a stopping signal to the crossing 270 signal and the obstruction signal 260, drives the crossing 270 signal and the obstruction signal 260 to correspondingly display the passing forbidding signal, and at the same time, the alarm 240 sends out an alarming signal. After the pedestrians and vehicles in the crossing 270 area receive the alarming signal, the pedestrians and vehicles that have entered the crossing 270 area should pass through as soon as possible, and the pedestrians and vehicles that have not entered the crossing 270 area should stop and wait. The control system enters an emptying time period, and within the emptying time period, the obstacle detection equipment 250 shoots the crossing 270 area in real time and identifies the pedestrians and vehicles in the shot image through the control terminal 200, to determine the emptying situation of the crossing 270 area in real time, and meanwhile, an emptying time is preset in the control system, and within the emptying time, if the control terminal 200 judges that the emptying of the crossing 270 area is completed, the control terminal 200 closes the crossing 270 area by correspondingly controlling the roadway gate of the crossing 270 to be closed; after the crossing 270 is completely closed, the control terminal 200 drives the obstruction signal 260 to display a passing permission signal, and the train 220 passes through the crossing 270 after obtaining the driving permission; if the emptying of the crossing 270 area is not completed within the emptying time, that is, the roadway gate is not closed and the closing operation of the crossing 270 is not completed, the control terminal 200 controls the obstruction signal 260 to display a passing forbidding signal, and the train 220 stops or slows down to pass through visually.

To realize the above control flow and ensure the passing safety of the crossing, the distance L (hereinafter also referred to as the length L of the approaching area) between the detection point and the crossing should meet certain requirements. Specifically, the length L of the approaching area is solved by taking the train running speed as V and combining with the time parameters related to the crossing control, and the calculation formula (1) for the length L of the approaching area may be obtained as follows: $L = VT + {L}_{1} + {L}_{V}$ (1), in the formula (1), V represents the maximum speed of the train allowed to pass through the crossing, T is the time required for closing the crossing, L₁ is the distance from the obstruction signal to the crossing; L_{V} is the braking distance of the train approaching the crossing at the maximum speed V, that is, when the crossing fails to be closed, the train should be able to stop completely in front of the obstruction signal within the distance of L_{V}.

At the same time, the above closing time of the crossing may be expressed as T = T₁ + T₂, where T₁ is the time from the alarm sending out the alarming signal to the emptying the crossing area (i.e., the above emptying time), T₂ is the closing time of the roadway gate, and correspondingly, VT represents the distance traveled by the train at the maximum speed within the time from the sending out train approaching notice at the crossing to the completing closing of the whole crossing (or the closing failure of the crossing). The formula (2) for calculating the length L of the approaching area is obtained as follows: $L = V \left({T}_{1}+{T}_{2}\right) + {L}_{1} + Lv$ (2).

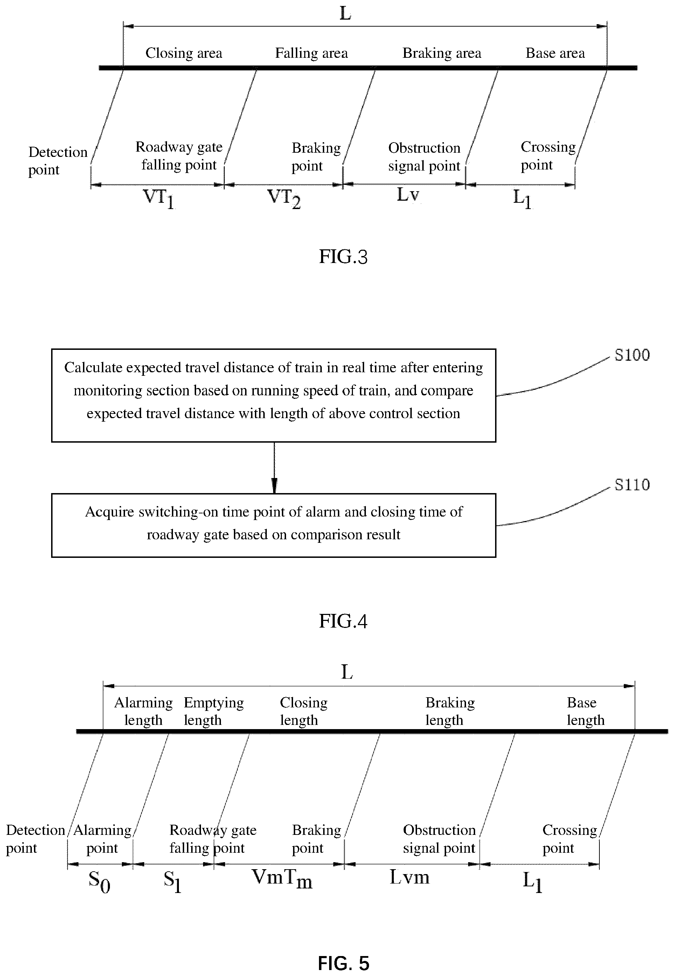

In combination with the above formula (2) and FIG. 3, the above approaching area may be divided into a closing area, a falling area, a braking area, and a base area, where the length La of the closing area is the travel distance of the train during the emptying time, the length Lb of the falling area is the travel distance of the train within the lowering time of the roadway gate, the braking area is the braking distance Lv of the train, the base area is the distance L₁ between the obstruction signal and the crossing, and the formula (3) for calculating the length of the approaching area can be obtained as follows: $L = La + Lb + L 1 + Lv$ (3).

In an actual control scenario, the length L of the approaching area and the base length L₁ are constant values, the difference (i.e., L - L₁) between the length L of the approaching area and the base length L₁ is correspondingly denoted as Ls, the section from an approaching point to the obstruction signal is correspondingly denoted as a control area, and the closing time T₂ of the roadway gate is also a constant value. At this time, because the actual running speed of the train is less than the maximum speed allowed to pass, the length Lv of the above braking area is correspondingly reduced, according to the above formula (3), the length La of the closing area may be correspondingly increased, at the same time, the actual speed of the train is less than the maximum passing speed, that is, the switching-on time of the alarm is correspondingly delayed and the closing time of the roadway gate is prolonged, this is, the passing time of the pedestrians and vehicles is prolonged. To maximize the passing efficiency, the following crossing control method (hereinafter referred to as the control method) is given.

Referring to FIG. 4, the control method is generally realized based on the train running speed information, that is, the optimization of the crossing control solution is realized through the train speed information, where the acquisition of the train running speed information may be realized through the communication between the train and the control terminal in the crossing control system, that is, the train and the control terminal are connected through the network, and the train sends the train speed information to the control terminal through the network. In some embodiments of the control method, the train running speed information may be realized by a speed measuring device disposed beside the crossing. Exemplarily, the speed measuring device may be equipment such as a speed measuring radar, and the speed measuring radar is in communication connection with the control terminal to transmit the measured train running speed information to the control terminal in real time. According to the received speed information, the control terminal correspondingly sends a control instruction to other equipment such as an on-off signal to implement the above control method. Preferably, the speed measuring radar is at least disposed at a detection point position of the above control system to measure the train running speed when the train enters the approaching area. In the preferred embodiment of the control method, a plurality of speed measuring radars are provided at intervals along the extending direction of the approaching area, to monitor the whole section of the train running speed within the range of the approaching area and obtain the train running speed information (hereinafter also referred to as running speed), and the control method includes:
S100, calculating an expected travel distance of the train after the train enters the control area in real time based on the running speed of the train, and comparing the expected travel distance with the length of the control area; and
S110, determining the switching-on time point of the alarm and the closing time of the roadway gate based on the comparison result.

The step of determining the switching-on time point of the alarm and the closing time of the roadway gate based on the comparison result includes:
constructing an inequality between the expected travel distance and the length of the control area, when the expected travel distance is not less than the length of the control area, correspondingly acquiring the travel time of the train in the control area under this node, and obtaining the switching-on time point of the alarm and the closing time of the roadway gate based on the above travel time.

Furthermore, the switching-on time point of the alarm and the closing time of the roadway gate are calculated based on different inequalities of the expected travel distance and the length of the control area, and correspondingly, the inequality for obtaining the switching-on time point of the alarm is denoted as a first inequality, the inequality for obtaining the closing time of the roadway gate is denoted as a second inequality, and to realize the calculation of the first inequality and the second inequality, when the switching-on time point of the alarm is calculated based on the first inequality, the closing time of the roadway gate in the first inequality is a constant value, and when the closing time of the roadway gate is calculated based on the second inequality, the switching-on time point of the alarm in the second inequality is a constant value, that is, the switching-on time point of the alarm and the closing time of the roadway gate are the only variables except the train running speed in the calculation process.

In some embodiments of the above control method, referring to FIG. 5, the expected travel distance of the train includes an alarming length, an emptying length, a closing length, and a braking length, where the brake length is the travel distance of the train from the start of braking to the stop of the train at the current train speed. The alarming length is the running distance of the train from the time when the train enters the control area to the time when the alarm sends out the alarming signal. The emptying length is the train running distance within the emptying time period of the crossing area. The closing length is the train running distance within the closing time period of the roadway gate.

In the calculation process of the switching-on time point of the alarm, the time T₁ corresponding to the above emptying length and the time T₂ corresponding to the closing length are both constant values, and in the calculation process of the closing time of the roadway gate, the time corresponding to the alarming length and the time corresponding to the emptying length are both constant values, where the numerical value of the alarming length is calculated based on the known value of the switching-on time point of the alarm.

The above control method further comprises the step of controlling the obstruction signal to display a passing or stopping signal based on the closing time of the roadway gate. Specifically, when the closing of the crossing is completed within the closing time of the roadway gate (namely, the closing of the gate motor is completed), the obstruction signal is instructed to send the passing signal, and when the closing of the crossing is not completed within the closing time of the roadway gate, the obstruction signal is instructed to send the stopping signal.

In some embodiments of the control method, to simplify the calculation of the running distance and the running time of the train, the speed measuring radar periodically acquires the running speed of the train, and at this time, the information of the running distance and the running time of the train may be acquired by calculating the train running distance in each period and summing the running distance and the period time of a plurality of periods. The calculation method is described by taking the calculation of part of the length in the calculation process of the switching-on time point of the alarm as an example, as follows:
In the calculation process of the switching-on time point of the alarm, the calculation formula of the above alarming length may be expressed as ${\sum }_{i = 0}^{n} {V}_{i} C$. In the formula, *Vᵢ* is the train running speed detected in each period, C is the detection period of the train speed, the calculation result of the formula is the train running distance in n periods, and nC is the corresponding time.

An embodiment of the control method is now given to illustrate the complete control flow of the crossing.

After the train enters the control area, the running speed of the train is periodically measured by the speed measuring radar to obtain a first inequality between the expected travel distance and the length of the control area: ${\sum }_{i = 0}^{n} {V}_{i} C + {V}_{n} T + {L}_{{V}_{n}} < L - {L}_{1} ,$ where *Vᵢ* is the train running speed measured in a period, C is the measurement period of the train speed, ${\sum }_{i = 0}^{n} {V}_{i} C$ represents the alarming length, which is represented by *S₀*; *Vₙ* is the train speed in the n<th> period after the alarm is switched on (the speed of the train continuing to pass through the crossing does not exceed *Vₙ*); *L_{Vn}* is the maximum braking distance of the train approaching the crossing at *Vₙ*, which is the sum of T₁ and T₂ in the normal control flow; when the comparison result of the inequality is false, that is, the expected train running distance is not less than the length of the control area, which indicates that the crossing should be closed in the n<th> period after the train approaches, and correspondingly, the alarm starts to send out an alarming signal, that is, the time point of the n<th> period is the switching-on time point of the alarm, and in the actual scene, if the initial speed of the train entering the control area is the maximum speed allowed to pass, the result of the first inequality is false when the train passes through the detection, and correspondingly, the alarm will send an alarming signal when the train enters the control area.

After the switching-on time of the alarm is obtained, the alarm length *S₀* is calculated according to the time.

Meanwhile, since the solution of the present application does not involve the road side passing, it is considered that *T₁* (the emptying time of the crossing area after the alarming signal of the alarm is sent out) is unchanged, the train running distance is correspondingly calculated according to the time and the train running speed information as follows: ${\sum }_{j = 0}^{{T}_{1} / C} {V}_{j} C$, the distance is the emptying length, and the corresponding emptying length is denoted as *S₁*.

After the control system sends out the closing instructions of the roadway gate, the train continues to move forward until the train runs to an emergency braking point of the train, and the time during the period is available to close the roadway gate on one road side of the crossing; the second inequality of the expected running distance and the length of the control area is correspondingly obtained as follows: ${\sum }_{k = 0}^{{T}_{m} / C} {V}_{k} + {S}_{0} + {S}_{1} + {L}_{{V}_{m}} \leq L - {L}_{1} .$

In the second inequality, *Tₘ* is the time available to close the roadway gate; *L_{Vm}* is a braking distance of the train at a current speed; when the comparison result of the second inequality is false, the corresponding *Tₘ* is maximum closing time of the roadway gate.

If the crossing is completely closed before the closing time *Tₘ* of the roadway gate is exhausted, the obstruction signal will display a passing signal, and the train can pass normally; otherwise, the obstruction signal will send out a stopping signal, and the train can stop correspondingly before the obstruction signal.

The scope of the present invention is defined in the appended claims.

## Claims

1. A crossing control method, wherein a crossing (270) is controlled based on a real-time running speed of a train (220), the method comprising:
calculating an expected travel distance of the train (220) in real time after the train (220) enters a control area based on the running speed of the train (220), and comparing the expected travel distance with a length of the control area; and
determining a switching-on time point of an alarm (240) and closing time of a roadway gate based on the comparison result,
wherein controlling an obstruction signal (260) to display a passing or stopping signal based on the closing time of the roadway gate,
wherein the determining a switching-on time point of an alarm and closing time of a roadway gate based on the comparison result comprises:
constructing an inequality of the expected travel distance and the length of the control area, and when the expected travel distance is not less than the length of the control area, acquiring travel time of the train (220) in the control area under a node correspondingly, and obtaining the switching-on time point of the alarm (240) and the closing time of the roadway gate based on the travel time,
wherein the switching-on time point of the alarm (240) and the closing time of the roadway gate are calculated based on different inequalities of the expected travel distance and the length of the control area, and the switching-on time point of the alarm (240) and the closing time of the roadway gate are only variables in the respective inequalities except for the train running speed,
wherein the expected travel distance comprises an alarming length, an emptying length, a closing length, and a braking length,
wherein the switching-on time point of the alarm (240) is obtained based on the following inequality: ${\sum }_{i = 0}^{n} {V}_{i} C + {V}_{n} T + {L}_{{V}_{n}} < L - {L}_{1} ,$ wherein *Vᵢ* is the train (220) running speed measured in a period, *C* is a measurement period of the train (220) speed, ${\sum }_{i = 0}^{n} {V}_{i} C$ represents the alarming length *S₀, Vₙ* is a train (220) speed in the n^{th} period after the alarm (240) is switched on, *L_{Vn}* is a maximum braking distance for the train (220) to approach the crossing (270) at *Vₙ*, *T* = *T₁ + T₂*, *T₁* is time from the alarm (240) sending an alarming signal to the emptying a crossing area, *T₂* is the closing time of the roadway gate, *L* is a distance between a detection point (210) and the crossing (270), *L₁* is a distance from the obstruction signal (260) to the crossing (270), and *L - L₁* is the length of the control area,
wherein the closing time of the roadway gate is obtained based on the following inequality: ${\sum }_{k = 0}^{{T}_{m} / C} {V}_{k} + {S}_{0} + {S}_{1} + {L}_{{V}_{m}} \leq L - {L}_{1} ,$ wherein *Tₘ* is time available to close the roadway gate; *L_{Vm}* is a braking distance of the train (220) at a current speed, *L* is a distance between a detection point (210) and the crossing (270), *L₁* is a distance from the obstruction signal (260) to the crossing (270), and *L - L₁* is the length of the control area.

2. The crossing control method according to claim 1, whereby the calculating an expected travel distance of the train (220) after entering a control area in real time based on the train running speed:
periodically acquiring the train running speed, to calculate a running distance of the train (220) in a plurality of periods.

3. The crossing control method according to claim 1, whereby the real-time running speed of the train (220) is measured by at least one speed measuring device disposed at a position of the detection point (210).

4. A crossing control device, comprising:
an acquisition and comparison module 300, configured to calculate an expected travel distance of a train (220) in real time after the train (220) enters a control area based on a train (220) running speed, and to compare the expected travel distance with a length of the control area; and
a calculation module 310, configured to determine a switching-on time point of an alarm (240) and closing time of a roadway gate based on the comparison result;
wherein controlling an obstruction signal (260) to display a passing or stopping signal based on the closing time of the roadway gate,
wherein the determining a switching-on time point of an alarm and closing time of a roadway gate based on the comparison result comprises:
constructing an inequality of the expected travel distance and the length of the control area, and when the expected travel distance is not less than the length of the control area, acquiring travel time of the train (220) in the control area under a node correspondingly, and obtaining the switching-on time point of the alarm (240) and the closing time of the roadway gate based on the travel time,
wherein the switching-on time point of the alarm (240) and the closing time of the roadway gate are calculated based on different inequalities of the expected travel distance and the length of the control area, and the switching-on time point of the alarm (240) and the closing time of the roadway gate are only variables in the respective inequalities except for the train running speed,
wherein the expected travel distance comprises an alarming length, an emptying length, a closing length, and a braking length,
wherein the switching-on time point of the alarm (240) is obtained based on the following inequality: ${\sum }_{i = 0}^{n} {V}_{i} C + {V}_{n} T + {L}_{{V}_{n}} < L - {L}_{1} ,$ wherein *Vᵢ* is the train (220) running speed measured in a period, *C* is a measurement period of the train (220) speed, ${\sum }_{i = 0}^{n} {V}_{i} C$ represents the alarming length *S₀*, *Vₙ* is a train (220) speed in the n^{th} period after the alarm (240) is switched on, *L_{Vn}* is a maximum braking distance for the train (220) to approach the crossing (270) at *Vₙ*, *T* = *T₁ + T₂*, *T₁* is time from the alarm (240) sending an alarming signal to the emptying a crossing area, *T₂* is the closing time of the roadway gate, *L* is a distance between a detection point (210) and the crossing (270), *L₁* is a distance from the obstruction signal (260) to the crossing (270), and *L - L₁* is the length of the control area,
wherein the closing time of the roadway gate is obtained based on the following inequality: ${\sum }_{k = 0}^{{T}_{m} / C} {V}_{k} + {S}_{0} + {S}_{1} + {L}_{{V}_{m}} \leq L - {L}_{1} ,$ wherein *Tₘ* is time available to close the roadway gate; *L_{Vm}* is a braking distance of the train (220) at a current speed, *L* is a distance between a detection point (210) and the crossing (270), *L₁* is a distance from the obstruction signal (260) to the crossing (270), and *L - L₁* is the length of the control area.

5. Electronic equipment, comprising:
a processor;
a memory, comprising one or more computer program modules;
wherein the one or more computer program modules are stored in the memory and configured to be executed by the processor, the one or more computer program modules comprise instructions for implementing the method according to any one of claims 1-2.

6. A computer-readable storage medium, by which non-transitory computer-readable instructions are stored, and when the non-transitory computer-readable instructions are executed by a computer, the method according to any one of claims 1-2 is implemented.

## Patentansprüche

1. Verfahren zur Steuerung einer Bahnübergangsstelle (270), wobei die Bahnübergangsstelle (270) basierend auf einer Echtzeit-Fahrgeschwindigkeit eines Zuges (220) gesteuert wird, wobei das Verfahren umfasst:
Berechnen einer erwarteten Fahrstrecke des Zuges (220) in Echtzeit, nachdem der Zug (220) einen Kontrollbereich betreten hat, basierend auf der Fahrgeschwindigkeit des Zuges (220), und Vergleichen der erwarteten Fahrstrecke mit einer Länge des Kontrollbereichs; und
Bestimmen eines Einschaltzeitpunkts einer Alarmanlage (240) und einer Schließzeit eines Schrankens basierend auf dem Vergleichsergebnis,
wobei ein Sperrsignalgeber (260) basierend auf der Schließzeit des Schrankens gesteuert wird, um ein Durchfahrts- oder Haltesignal anzuzeigen,
wobei das Bestimmen eines Einschaltzeitpunkts einer Alarmanlage und einer Schließzeit eines Schrankens basierend auf dem Vergleichsergebnis umfasst:
Aufstellen einer Ungleichung der erwarteten Fahrstrecke und der Länge des Kontrollbereichs, und wenn die erwartete Fahrstrecke nicht kleiner als die Länge des Kontrollbereichs ist, Erfassen einer Fahrzeit des Zuges (220) in dem Kontrollbereich unter einem entsprechenden Knotenpunkt, und Erhalten des Einschaltzeitpunkts der Alarmanlage (240) und der Schließzeit des Schrankens basierend auf der Fahrzeit,
wobei der Einschaltzeitpunkt der Alarmanlage (240) und die Schließzeit des Schrankens basierend auf unterschiedlichen Ungleichungen der erwarteten Fahrstrecke und der Länge des Kontrollbereichs berechnet werden, und der Einschaltzeitpunkt der Alarmanlage (240) und die Schließzeit des Schrankens in den jeweiligen Ungleichungen außer der Zugfahrgeschwindigkeit die einzigen Variablen sind,
wobei die erwartete Fahrstrecke eine Alarmslänge, eine Räumungslänge, eine Schließlänge und eine Bremslänge umfasst,
wobei
der Einschaltzeitpunkt der Alarmanlage (240) basierend auf der folgenden Ungleichung erhalten wird: ${\sum }_{i = 0}^{n} {V}_{i} C + {V}_{n} T + {L}_{{V}_{n}} < L - {L}_{1} ,$ wobei Vᵢ die in einem Zeitraum gemessene Fahrgeschwindigkeit des Zuges (220) ist, C ein Messzeitraum der Zuggeschwindigkeit (220) ist, ${\sum }_{i = 0}^{n} {V}_{i} C$ die Alarmslänge S₀ darstellt, Vₙ eine Zuggeschwindigkeit (220) in der n-ten Periode nach dem Einschalten der Alarmanlage (240) ist, *L_{Vn}* ein maximaler Bremsweg für den Zug (220) ist, um sich der Bahnübergangsstelle (270) mit Vₙ zu nähern, T = T₁ + T₂ ist, T₁ eine Zeit von dem Aussenden eines Alarmsignals durch die Alarmanlage (240) bis zur Räumung eines Bahnübergangsbereichs ist, T₂ die Schließzeit des Schrankens ist, L ein Abstand zwischen einem Erfassungspunkt (210) und der Bahnübergangsstelle (270) ist, L₁ ein Abstand von dem Sperrsignalgeber (260) zu der Bahnübergangsstelle (270) ist und L - L₁ die Länge des Kontrollbereichs ist,
wobei die Schließzeit des Schrankens basierend auf der folgenden Ungleichung erhalten wird: ${\sum }_{k = 0}^{{T}_{m} / C} {V}_{k} + {S}_{0} + {S}_{1} + {L}_{{V}_{m}} \leq L - {L}_{1} ,$ wobei Tₘ eine für das Schließen des Schrankens verfügbare Zeit ist; *L_{Vm}* ein Bremsweg des Zuges (220) bei einer aktuellen Geschwindigkeit ist, L ein Abstand zwischen einem Erfassungspunkt (210) und der Bahnübergangsstelle (270) ist, L₁ ein Abstand von dem Sperrsignalgeber (260) zu der Bahnübergangsstelle (270) ist und L - L₁ die Länge des Kontrollbereichs ist.

2. Verfahren zur Steuerung einer Bahnübergangsstelle nach Anspruch 1, wobei das Berechnen einer erwarteten Fahrstrecke des Zuges (220) nach dem Betreten eines Kontrollbereichs in Echtzeit basierend auf der Zugfahrgeschwindigkeit umfasst:
periodisches Erfassen der Zugfahrgeschwindigkeit, um eine Fahrstrecke des Zuges (220) in mehreren Zeiträumen zu berechnen.

3. Verfahren zur Steuerung einer Bahnübergangsstelle nach Anspruch 1, wobei die Echtzeit-Fahrgeschwindigkeit des Zuges (220) durch mindestens eine an einer Position des Erfassungspunkts (210) angeordnete Geschwindigkeitsmesseinrichtung gemessen wird.

4. Vorrichtung zur Steuerung einer Bahnübergangsstelle, umfassend:
ein Erfassungs- und Vergleichsmodul (300), das dazu eingerichtet ist, eine erwartete Fahrstrecke eines Zuges (220) in Echtzeit, nachdem der Zug (220) einen Kontrollbereich betreten hat, basierend auf einer Zugfahrgeschwindigkeit (220) zu berechnen und die erwartete Fahrstrecke mit einer Länge des Kontrollbereichs zu vergleichen; und
ein Berechnungsmodul (310), das dazu eingerichtet ist, einen Einschaltzeitpunkt einer Alarmanlage (240) und eine Schließzeit eines Schrankens basierend auf dem Vergleichsergebnis zu bestimmen;
wobei ein Sperrsignalgeber (260) basierend auf der Schließzeit des Schrankens gesteuert wird, um ein Durchfahrts- oder Haltesignal anzuzeigen,
wobei das Bestimmen eines Einschaltzeitpunkts einer Alarmanlage und einer Schließzeit eines Schrankens basierend auf dem Vergleichsergebnis umfasst:
Aufstellen einer Ungleichung der erwarteten Fahrstrecke und der Länge des Kontrollbereichs, und wenn die erwartete Fahrstrecke nicht kleiner als die Länge des Kontrollbereichs ist, Erfassen einer Fahrzeit des Zuges (220) in dem Kontrollbereich unter einem entsprechenden Knotenpunkt, und Erhalten des Einschaltzeitpunkts der Alarmanlage (240) und der Schließzeit des Schrankens basierend auf der Fahrzeit,
wobei der Einschaltzeitpunkt der Alarmanlage (240) und die Schließzeit des Schrankens basierend auf unterschiedlichen Ungleichungen der erwarteten Fahrstrecke und der Länge des Kontrollbereichs berechnet werden, und der Einschaltzeitpunkt der Alarmanlage (240) und die Schließzeit des Schrankens in den jeweiligen Ungleichungen außer der Zugfahrgeschwindigkeit die einzigen Variablen sind,
wobei die erwartete Fahrstrecke eine Alarmslänge, eine Räumungslänge, eine Schließlänge und eine Bremslänge umfasst,
wobei
der Einschaltzeitpunkt der Alarmanlage (240) basierend auf der folgenden Ungleichung erhalten wird: ${\sum }_{i = 0}^{n} {V}_{i} C + {V}_{n} T + {L}_{{V}_{n}} < L - {L}_{1} ,$ wobei Vᵢ die in einem Zeitraum gemessene Fahrgeschwindigkeit des Zuges (220) ist, C ein Messzeitraum der Zuggeschwindigkeit (220) ist, ${\sum }_{i = 0}^{n} {V}_{i} C$ die Alarmslänge S₀ darstellt, Vₙ eine Zuggeschwindigkeit (220) in der n-ten Periode nach dem Einschalten der Alarmanlage (240) ist, *L_{Vn}* ein maximaler Bremsweg für den Zug (220) ist, um sich der Bahnübergangsstelle (270) mit Vₙ zu nähern, T = T₁ + T₂ ist, T₁ eine Zeit von dem Aussenden eines Alarmsignals durch die Alarmanlage (240) bis zur Räumung eines Bahnübergangsbereichs ist, T₂ die Schließzeit des Schrankens ist, L ein Abstand zwischen einem Erfassungspunkt (210) und der Bahnübergangsstelle (270) ist, L₁ ein Abstand von dem Sperrsignalgeber (260) zu der Bahnübergangsstelle (270) ist und L - L₁ die Länge des Kontrollbereichs ist,
wobei die Schließzeit des Schrankens basierend auf der folgenden Ungleichung erhalten wird: ${\sum }_{k = 0}^{{T}_{m} / C} {V}_{k} + {S}_{0} + {S}_{1} + {L}_{{V}_{m}} \leq L - {L}_{1} ,$ wobei Tₘ eine für das Schließen des Schrankens verfügbare Zeit ist; *L_{Vm}* ein Bremsweg des Zuges (220) bei einer aktuellen Geschwindigkeit ist, L ein Abstand zwischen einem Erfassungspunkt (210) und der Bahnübergangsstelle (270) ist, L₁ ein Abstand von dem Sperrsignalgeber (260) zu der Bahnübergangsstelle (270) ist und L - L₁ die Länge des Kontrollbereichs ist.

5. Elektronische Vorrichtung, umfassend:
einen Prozessor;
einen Speicher, der ein oder mehrere Computerprogrammmodule umfasst;
wobei das eine oder die mehreren Computerprogrammmodule in dem Speicher gespeichert und dazu eingerichtet sind, von dem Prozessor ausgeführt zu werden, wobei das eine oder die mehreren Computerprogrammmodule Anweisungen zur Implementierung des Verfahrens nach einem der Ansprüche 1-2 umfassen.

6. Computerlesbares Speichermedium, das nichtflüchtige computerlesbare Anweisungen speichert, wobei bei Ausführung der nichtflüchtigen computerlesbaren Anweisungen durch einen Computer das Verfahren nach einem der Ansprüche 1-2 implementiert wird.

## Revendications

1. Procédé de contrôle d'un passage à niveau (270), le passage à niveau (270) étant contrôlé sur la base d'une vitesse de circulation en temps réel d'un train (220), le procédé comprenant :
le calcul d'une distance de déplacement prévue du train (220) en temps réel après que le train (220) est entré dans une zone de contrôle sur la base de la vitesse de circulation du train (220), et la comparaison de la distance de déplacement prévue avec une longueur de la zone de contrôle ; et
la détermination d'un instant d'activation d'une alarme (240) et d'un temps de fermeture d'une barrière sur la base du résultat de comparaison,
dans lequel un signal d'obstruction (260) est commandé pour afficher un signal de passage ou d'arrêt sur la base du temps de fermeture de la barrière,
dans lequel la détermination d'un instant d'activation d'une alarme et d'un temps de fermeture d'une barrière sur la base du résultat de comparaison comprend :
la construction d'une inéquation de la distance de déplacement prévue et de la longueur de la zone de contrôle, et lorsque la distance de déplacement prévue n'est pas inférieure à la longueur de la zone de contrôle, l'acquisition correspondante d'un temps de déplacement du train (220) dans la zone de contrôle sous un nœud correspondant, et l'obtention de l'instant d'activation de l'alarme (240) et du temps de fermeture de la barrière sur la base du temps de déplacement,
dans lequel l'instant d'activation de l'alarme (240) et le temps de fermeture de la barrière sont calculés sur la base de différentes inéquations de la distance de déplacement prévue et de la longueur de la zone de contrôle, et l'instant d'activation de l'alarme (240) et le temps de fermeture de la barrière sont les seules variables dans les inéquations respectives, à l'exception de la vitesse de circulation du train,
dans lequel la distance de déplacement prévue comprend une longueur d'alarme, une longueur de dégagement, une longueur de fermeture et une longueur de freinage,
dans lequel
l'instant d'activation de l'alarme (240) est obtenu sur la base de l'inéquation suivante : ${\sum }_{i = 0}^{n} {V}_{i} C + {V}_{n} T + {L}_{{V}_{n}} < L - {L}_{1} ,$ où Vᵢ est la vitesse de circulation du train (220) mesurée dans une période, C est une période de mesure de la vitesse du train (220), ${\sum }_{i = 0}^{n} {V}_{i} C$ représente la longueur d'alarme S₀, Vₙ est une vitesse du train (220) dans la n-ième période après l'activation de l'alarme (240), *L_{Vn}* est une distance de freinage maximale pour que le train (220) s'approche du passage à niveau (270) à Vₙ, T = T₁ + T₂, T₁ est un temps entre l'envoi d'un signal d'alarme par l'alarme (240) et le dégagement d'une zone de passage à niveau, T₂ est le temps de fermeture de la barrière, L est une distance entre un point de détection (210) et le passage à niveau (270), L₁ est une distance du signal d'obstruction (260) au passage à niveau (270), et L - L₁ est la longueur de la zone de contrôle,
dans lequel le temps de fermeture de la barrière est obtenu sur la base de l'inéquation suivante : ${\sum }_{k = 0}^{{T}_{m} / C} {V}_{k} + {S}_{0} + {S}_{1} + {L}_{{V}_{m}} \leq L - {L}_{1} ,$ où Tₘ est un temps disponible pour fermer la barrière ; *L_{Vm}* est une distance de freinage du train (220) à une vitesse actuelle, L est une distance entre un point de détection (210) et le passage à niveau (270), L₁ est une distance du signal d'obstruction (260) au passage à niveau (270), et L - L₁ est la longueur de la zone de contrôle.

2. Procédé de contrôle d'un passage à niveau selon la revendication 1, dans lequel le calcul d'une distance de déplacement prévue du train (220) après l'entrée dans une zone de contrôle en temps réel sur la base de la vitesse de circulation du train comprend :
l'acquisition périodique de la vitesse de circulation du train, pour calculer une distance de déplacement du train (220) dans une pluralité de périodes.

3. Procédé de contrôle d'un passage à niveau selon la revendication 1, dans lequel la vitesse de circulation en temps réel du train (220) est mesurée par au moins un dispositif de mesure de vitesse disposé à une position du point de détection (210).

4. Dispositif de contrôle d'un passage à niveau, comprenant :
un module d'acquisition et de comparaison (300), configuré pour calculer une distance de déplacement prévue d'un train (220) en temps réel après que le train (220) est entré dans une zone de contrôle sur la base d'une vitesse de circulation du train (220), et pour comparer la distance de déplacement prévue avec une longueur de la zone de contrôle ; et
un module de calcul (310), configuré pour déterminer un instant d'activation d'une alarme (240) et un temps de fermeture d'une barrière sur la base du résultat de comparaison ;
dans lequel un signal d'obstruction (260) est commandé pour afficher un signal de passage ou d'arrêt sur la base du temps de fermeture de la barrière,
dans lequel la détermination d'un instant d'activation d'une alarme et d'un temps de fermeture d'une barrière sur la base du résultat de comparaison comprend :
la construction d'une inéquation de la distance de déplacement prévue et de la longueur de la zone de contrôle, et lorsque la distance de déplacement prévue n'est pas inférieure à la longueur de la zone de contrôle, l'acquisition correspondante d'un temps de déplacement du train (220) dans la zone de contrôle sous un nœud correspondant, et l'obtention de l'instant d'activation de l'alarme (240) et du temps de fermeture de la barrière sur la base du temps de déplacement,
dans lequel l'instant d'activation de l'alarme (240) et le temps de fermeture de la barrière sont calculés sur la base de différentes inéquations de la distance de déplacement prévue et de la longueur de la zone de contrôle, et l'instant d'activation de l'alarme (240) et le temps de fermeture de la barrière sont les seules variables dans les inéquations respectives, à l'exception de la vitesse de circulation du train,
dans lequel la distance de déplacement prévue comprend une longueur d'alarme, une longueur de dégagement, une longueur de fermeture et une longueur de freinage,
dans lequel
l'instant d'activation de l'alarme (240) est obtenu sur la base de l'inéquation suivante : ${\sum }_{i = 0}^{n} {V}_{i} C + {V}_{n} T + {L}_{{V}_{n}} < L - {L}_{1} ,$ où Vᵢ est la vitesse de circulation du train (220) mesurée dans une période, C est une période de mesure de la vitesse du train (220), ${\sum }_{i = 0}^{n} {V}_{i} C$ représente la longueur d'alarme S₀, Vₙ est une vitesse du train (220) dans la n-ième période après l'activation de l'alarme (240), *L_{Vn}* est une distance de freinage maximale pour que le train (220) s'approche du passage à niveau (270) à Vₙ, T = T₁ + T₂, T₁ est un temps entre l'envoi d'un signal d'alarme par l'alarme (240) et le dégagement d'une zone de passage à niveau, T₂ est le temps de fermeture de la barrière, L est une distance entre un point de détection (210) et le passage à niveau (270), L₁ est une distance du signal d'obstruction (260) au passage à niveau (270), et L - L₁ est la longueur de la zone de contrôle,
dans lequel le temps de fermeture de la barrière est obtenu sur la base de l'inéquation suivante : ${\sum }_{k = 0}^{{T}_{m} / C} {V}_{k} + {S}_{0} + {S}_{1} + {L}_{{V}_{m}} \leq L - {L}_{1} ,$ où Tₘ est un temps disponible pour fermer la barrière ; *L_{Vm}* est une distance de freinage du train (220) à une vitesse actuelle, L est une distance entre un point de détection (210) et le passage à niveau (270), L₁ est une distance du signal d'obstruction (260) au passage à niveau (270), et L - L₁ est la longueur de la zone de contrôle.

5. Équipement électronique, comprenant :
un processeur ;
une mémoire, comprenant un ou plusieurs modules de programme informatique ;
dans lequel lesdits un ou plusieurs modules de programme informatique sont stockés dans la mémoire et configurés pour être exécutés par le processeur, lesdits un ou plusieurs modules de programme informatique comprenant des instructions pour mettre en œuvre le procédé selon l'une quelconque des revendications 1 à 2.

6. Support de stockage lisible par ordinateur, stockant des instructions lisibles par ordinateur non transitoires, lorsque lesdites instructions lisibles par ordinateur non transitoires sont exécutées par un ordinateur, le procédé selon l'une quelconque des revendications 1 à 2 est mis en œuvre.
